# EUROPEAN PATENT APPLICATION

(11) **EP 1 394 209 A1**
(43) Date of publication of application: **03.03.2004**
(21) Application number: 03255014.7
(22) Date of filing: 13.08.2003
(51) Int. Cl.: C08L 51/00, C08L 9/00, C08L 13/00

(54) **Polymeric compositions useful in plastic resins**

(30) Priority: 26.08.2002 US 406021 P
(71) Applicant: ROHM AND HAAS COMPANY, Philadelphia, Pennsylvania 19106-2399 (US)
(72) Inventor: Chirgott, Paul Steve, Strongsville Ohio 44136 (US)
(74) Representative: Kent, Venetia Katherine

(57) **Abstract**

The invention provides compositions including a population of particles having a void-containing rubber portion wherein the proportion of the voids ranges from 1 to 90%. In one embodiment, the rubber portion ranges from 20 to 90 weight percent; and in another embodiment from 92 to 100 weight percent, of the individual particles. In the former embodiment, a crosslinking agent can be present. If not present, at least one of the following conditions must exist: 1. the polymeric composition includes at least 1 weight percent of a processing oil component, 2. the polymeric composition includes at least 2 weight percent of a processing aid component; 3. the polymeric composition contains at least two populations of particles, wherein each has a rubber-containing portion, and wherein the difference is in at least one of the following: their void concentration, their chemical composition, their average particle size, or their shape; and 4. the polymeric composition contains at least one population of particles having a rubber-containing portion including at least one of the following blends: an organosiloxane and an isobutylene; a vinyl polymer and an isobutylene polymer; or an organosiloxane polymer, a vinyl polymer, and an optional isobutylene polymer. In the latter embodiment, a crosslinking agent can also be present, as well as any of features 1, 2 or 3 set out above. The invention further provides novel thermoplastic systems comprising a resin component and at least one of the above polymeric compositions.

## Description

The present invention relates to a thermoplastic resin composition having impact resistance, particularly to a thermoplastic resin composition having impact resistance and comprising a thermoplastic resin and graft copolymer particles having a rubber portion with voids defined therein.

Conventional thermoplastic resins, for example, vinyl chloride resins such as polyvinyl chloride; acrylic resins such as polymethyl methacrylate; aromatic vinyl resins such as polystyrene and styrene-acrylonitrile copolymer; carbonate resins such as polycarbonate; amide resins such as Nylon 6; polyester resins such as polyethylene terephthalate; olefin resins such as polypropylene; and polymer alloys of those resins, for example, alloy of styrene-acrylonitrile copolymer and polycarbonate, alloy of α-methylstyrene-acrylonitrile copolymer and polyvinyl chloride and alloy of polystyrene and polyphenylene oxide are inherently low in impact resistance. In order to improve impact resistance of those resins and alloys thereof, generally there have been widely employed methods for adding, to rubber particles, graft copolymer particles obtained by graft-copolymerizing various monomers. Though the degree of improvement of impact resistance by the addition of the graft copolymer particles is remarkable, for further improving the impact resistance efficiently, there have been made many proposals of improving graft copolymer particles.

However improvement by those methods have reached their limits, and it is difficult to improve impact resistance more significantly. Also when an adding amount of graft copolymer particles is increased, there is a problem that other characteristics, for example, processability, weather resistance and economic efficiency are lowered.

Meanwhile, crazing and shearing yield are an important factor on improvement of impact resistance of a thermoplastic resin. In order to cause such phenomena, stress concentration in a molded article is inevitable. For that purpose, rubber particles are added. Optimizing a size, shape and softness (Tg and degree of crosslinking of rubber) of rubber particles also has a great effect on the stress concentration, and it is anticipated that making a large cavity in the rubber particle previously has greater influence on the stress concentration ("Impact Resistance of Plastics" by Ikuo Narisawa, pp. 131, 155, published by Siguma Shuppan (1994)). However this proposal is hypothetical, and how it is realized is not disclosed.

It has been observed that, for improving impact resistance of thermoplastic resins such as a vinyl chloride resin, stress concentration of a molded article, and formation and expansion of voids in a rubber play an important role. For obtaining stress concentration, it is essential to introduce a rubber-containing component having elastic modulus significantly lower than that of a thermoplastic resin. Actually, optimization of a size and a shape of the rubber-containing component has been investigated by introducing various rubbers.

Also, formation and expansion of voids in the rubber-containing component have been shown to contribute to growth of shearing yield particularly having large energy absorption in an impact test. This leads to an improvement in impact resistance of a thermoplastic resin which contains such a void-containing impact modifier.

Therefore, the method to promote formation and expansion of voids in a rubber-containing component at impact (under stress) of a molded article is extremely important, and formation and expansion of voids in the rubber-containing component are considered to be significantly influenced by cross- linking state of the rubber. Also, when a rubber component is previously made hollow, there is possibility that voids are easily propagated under stress.

European Patent 1,142,951 investigated that the relation among the void state of a rubber component in a latex, the void state of a thermoplastic resin molded article mixed with an impact modifier containing a rubber component, and the impact strength of the molded article by changing an amount of a cross-linking agent controlling cross-linking condition of the rubber component.

Specifically, that patent discloses an impact modifier composition which comprises 30 to 90 weight percent of a void-containing rubber core portion, and 10 to 70 weight percent of a shell portion. The rubber core portion has a glass transition temperature (hereinafter "Tg") of at most 0 °C. The rubber core portion also has from 0.1 to 1.5 weight percent of a cross linking agent. The shell portion is 60 to 100 weight percent of at least one vinyl monomer selected from the group consisting of a (meth)acrylate compound, an aromatic vinyl compound and a vinyl cyanide compound, and 0 to 40 weight percent of a monomer copolymerizable therewith. According to that patent, the impact modifier composition disclosed therein significantly improves the impact resistance of a thermoplastic resin.

While the impact modifiers disclosed in that patent address some problems, they still fall short of the industry's needs. Accordingly, the plastic additives industry and the plastic manufacturing industry continues to seek out impact modifier compositions which have excellent impact resistance, weather resistance and thermal stability when added to a thermoplastic resin system.

Therefore, one object of the present invention is to provide a novel impact modifier composition which provides excellent impact resistance, weather resistance and thermal stability when added to a thermoplastic resin system.

Another object of the present invention is to provide a novel thermoplastic resin system which has excellent impact resistance, weather resistance and thermal stability.

These and other objects will be apparent to those skilled in the art after reading the specification and appended claims.

The novel impact modifier compositions of the present invention include at least one population of polymeric particles which have a void-containing rubber portion in which the volumetric proportion of the voids defined within the rubber portion ranges from 1 to 90%.

In one embodiment, the void-containing rubber portion comprises from 20 to 90 weight percent of the individual polymeric particles. In this embodiment, a crosslinking agent can, optionally be present. However, if the crosslinking agent is not present, at least one of the following conditions must also exist:
1. The impact modifier composition must further include at least 1 weight percent of a processing oil component.
2. The impact modifier composition must further include at least 2 weight percent of a processing aid component.
3. The impact modifier composition must contain at least two different populations of polymeric particles, wherein each has a rubber-containing portion, and wherein the difference is in at least one of the following: the void concentration in the rubber-containing portions of each population, the chemical composition of each population, the average particle size of each population, or the shape of each population.
4. The impact modifier composition must contain at least one population of polymeric particles having a rubber-containing portion which includes at least one of the following blends: (a) an organosiloxane polymer component and an isobutylene polymer component; (b) a vinyl polymer component and an isobutylene polymer component; or (c) an organosiloxane polymer component, a vinyl polymer component and an optional isobutylene polymer component.

In another embodiment, the void-containing rubber portion comprises from 92 to 100 weight percent of the individual polymeric particles. In this embodiment, a crosslinking agent can also, optionally be present. Also in this embodiment, the features 1, 2, or 3 set out in the prior paragraph do not need to be present. However, it is within the scope of this embodiment of the invention for any one or more of those features to be present when practicing this embodiment.

The novel thermoplastic resin systems comprising yet another embodiment of the invention include a plastic resin component and an impact modifier component. The impact modifier component comprises at least one of the novel impact modifier compositions set out above.

The term "units derived from" used herein refers to polymer molecules that are synthesized according to known polymerization techniques wherein a polymer contains "units derived from" its constituent monomers.

The term "molecular weight" used herein refers to the weight average molecular weight of polymer molecules as determined by the gel permeation chromatography method.

The term "alkyl (meth)acrylate" used herein refers to both alkyl acrylate and alkyl methacrylate monomer compounds.

The term "stage" used herein is intended to encompass its broadest possible meaning, including the meaning conveyed in prior art such as in U.S. Patent 3,793,402 which offers various means for achieving "staged" polymers.

The term "parts" used herein is intended to mean "parts by weight". Unless otherwise stated, "total parts by weight" do not necessarily add to 100.

The term "weight percent" used herein is intended to mean "parts per hundred by weight" wherein the total parts add to 100.

The term "particle size" used herein refers to the mean particle diameter of a population of particles.

In one embodiment, the void-containing rubber portion comprises from 20 to 90 weight percent of the individual polymeric particles. In this embodiment, a crosslinking agent can, optionally be present.

In this embodiment, if a crosslinking agent is not present, at least one of the following conditions must also exist:
1. The impact modifier composition must further include at least 1 weight percent of a processing oil component.
2. The impact modifier composition must further include at least 2 weight percent of a processing aid component.
3. The impact modifier composition must contain at least two different populations of polymeric particles, wherein each has a rubber-containing portion, and wherein the difference is in at least one of the following: the void concentration in the rubber-containing portions of each population, the chemical composition of each population, the average particle size of each population, or the shape of each population.
4, The impact modifier composition must contain at least one population of polymeric particles having a rubber-containing portion which includes at least one of the following blends: (a) an organosiloxane polymer component and an isobutylene polymer component; (b) a vinyl polymer component and an isobutylene polymer component; or (c) an organosiloxane polymer component, a vinyl polymer component and an optional isobutylene polymer component.

Each of these will now be discussed in detail.

### Presence of a Processing Oil Component

Firstly, the impact modifier composition further includes at least 1 weight percent of a processing oil component. In this embodiment, the percentage of the weight of the processing oil component to the weight of the total population of polymeric particles typically ranges from 1 to 30 weight percent; or from 2 to 25 weight percent; or from 3 to 20 weight percent.

Moreover, the ratio of the weight of the processing oil component to the weight of the polymeric component typically ranges from 0.1:10 to 5.0:10. It is within the scope of this embodiment of the invention for this weight ratio to range from 0.5:10 to 4.5:10; or from 1.0:10 to 4.0:10; or from 1.5:10 to 3.5:10. The actual ratio used will depend upon the relative solubility of the processing oil component in the particular plastic resin and the polymeric composition. However, when the ratio is too large, problems of over lubrication can be encountered.

The term "processing oil" as it relates to the term "processing oil component" includes: (a) polymers which have a weight average molecular weight (Mw) of less than 5,000 g/mol; (b) alkylacrylates having an alkyl group containing 12 or more carbon atoms; (c) esters containing carboxylic acids or alcohols with 12 or more carbon atoms; (d) vegetable oils; (e) marine oils; (f) industrial oils; (g) palm oils; (h) animal fats; and (i) mineral oils. Examples of (a) include: polybutene, polydimethylsiloxane, polypropylene, polybutadiene, and polyisoprene. Examples of (b) include: stearyl (meth)acrylate, and lauryl (meth)acrylate. Examples of (c) include: methyl stearate, ethyl stearate, butyl stearate, and stearyl citrate. Examples of (d) include: sunflower oil, peanut oil and olive oil. An example of (e) includes: cod liver oil. Examples of (f) include: castor oil and linseed oil. An example of (g) includes: coconut oil. An example of (h) includes: tallow. Examples of (i) include: paraffinic oils with saturated straight or branched chains or rings containing at least 20 carbon atoms; naphthenic or relatively naphthenic, that is, containing saturated monocyclic (from 4 to 12 carbon atoms) or polycyclic (from 13 to 26 carbon atoms) hydrocarbon oils; microcrystalline wax, paraffin wax and low molecular weight polyolefins such as polyethylene wax, either in liquid, powder or flake form; aromatic oils with a minimum molecular weight of 300 g/mol; and white mineral oils which are a complex mixture of saturated paraffinic and naphthenic hydrocarbons and are free of aromatic compounds, sulphur containing compounds, acids and other impurities.

Under certain preferred circumstances, the processing oil component comprises mineral oils. If employed, the preferred mineral oils are typically those which are easy to handle and do not present environmental or health concerns. Such include those which have a low viscosity and those with a low volatility at the temperatures used during the milling and extrusion blending processes. Examples of specific mineral oils which have these properties include heavy mineral oils such as those termed USP mineral oils (they typically have a density ranging of from 0.86 - 0.90 g/ml), and light mineral oils (they typically have a density ranging of from 0.80-0.85g/ml). One preferred heavy mineral has a density of 0.86 g/ml; and one preferred light mineral oil has a density of 0.84 g/ml, both of these oils are available from the Aldrich Chemical Company.

When practicing this specific embodiment, it is contemplated that the processing oil component can be mixed with at least a portion of the population of polymeric particles by at least one of the following methods: (a) combining the processing oil directly or indirectly with the polymeric particles after the polymeric particles have been formed, or (b) adding the processing oil at the start of, or at some point during, the reaction process used to prepare the polymeric particles.

One example of a preferred process for combining at least one processing oil with the polymeric particles includes the following steps: (a) mixing together an aqueous surfactant solution, a first monomer material and an initiator; (b) heating the resulting mixture to polymerize the monomers; optionally (c) combining the resulting polymerized product from step (b) with a second monomer, a further initiator and further surfactant and heating the resulting mixture to produce a core/shell latex; and (d) isolating the resultant core/shell polymeric particles; wherein the processing oil is added to the reaction mixture during any one or more of the steps (a), (b), (c) or (d). It also within the scope of this embodiment for either at least a portion of the processing oil to be added after step (d), or for all of the processing oil to be added after step (d).

### Presence of a Processing Aid Component

Secondly, the impact modifier composition further includes at least 1 weight percent of a processing aid component. In this embodiment, the percentage of the weight of the processing aid component to the weight of the total population of polymeric particles typically ranges from 1 to 30 weight percent; or from 2 to 25 weight percent; or from 3 to 20 weight percent.

In accordance with this embodiment, the processing aid component comprises at least one population of processing aid particles. The population of processing aid particles can include single-stage particles, two-stage particles, or multi-stage polymer particles, as well as core/shell polymer particles.

When practicing this embodiment, the processing aid particles are typically comprised of polymerized units derived from one or more ethylenically unsaturated monomers. Typically, such monomers include at least one of the following: vinyl aromatics, butadiene, alkyl (meth)acrylates, and (meth)acrylonitriles.

As used in this embodiment, the terms "alkyl (meth)acrylate" refers to a C₂ to C₁₂ alkyl (meth)acrylate. It is also within the scope of this invention for the term alkyl (meth)acrylate to refer to a C₂ to C₁₀ alkyl (meth)acrylate, or a C₂ to C₈ alkyl (meth)acrylate.

In certain preferred embodiments, the processing aid particles contain at least 50 weight methyl methacrylate copolymerized with up to 50 parts by weight of at least one of the following: alkyl (meth)acrylates, styrene, and (meth)acrylonitrile. It is within the scope of this embodiment of the invention for the processing aid particles to contain at least 75 weight methyl methacrylate copolymerized with up to 25 parts by weight of at least one of the following: alkyl (meth)acrylates, styrene, and (meth)acrylonitrile.

In this embodiment, the processing aid particles can include "hard" polymeric particles having a Tg of at least 25°C; or at least 35°C; or at least 45°C, or at least 55°C. It is, however, within the scope of this invention for the processing aid particles to include "soft" polymeric particles having a Tg of at most 20°C; or at most 0°C; or at most -20°C; or at most -40°C.

The molecular weight of the processing aid particles is typically greater than 100,000 g/mol. Generally, the molecular weight of the processing aid particles is greater than 1,000,000 g/mol. If the processing aid particles used in this embodiment include "soft" polymeric particles as defined above, then, additional advantageous results can be observed when their molecular weight is at least 2,000,000 g/mol.; or at least 3,000,000 g/mol., or at least 4,000,000 g/mol., or at least 5,000,000 g/mol.

The upper limit of the molecular weight for the hard or soft polymeric particles of the processing aid is determined, in part, by the processing conditions to which they are exposed, as well as their desired end use. Typically, their molecular weight is less than 12,000,000 g/mol., or less than 10,000,000 g/mol, or less than 8,000,000 g/mol.

Hard polymeric processing aid particles may be formed from homo- or copolymers of monomers such as styrene, methyl methacrylate, butyl acrylate, and ethyl acrylate, especially when the particle is prepared as a single-stage polymer particle. Although it is preferred that the processing aid particles contain no crosslinker, the polymers may contain one or more units derived from multifunctional monomers containing two or more double bonds, such as from about 0.1 to about 5% of at least one of ALMA, allyl acrylate, DALMA, diallyl fumarate, divinylbenzene, a di- or triacrylate ester of a polyol, or a di- or trimethacrylate ester of a polyol.

Soft polymeric processing aid particles may comprise at least a first polymeric stage, wherein at least 50 weight percent of the first polymeric stage comprises a first polymeric component having units derived from one or more of the following: butadiene, and alkyl (meth)acrylates. Thus, the polymeric compositions which have a first polymeric stage comprising copolymers of butadiene and an alkyl (meth)acrylate(s), in any ratio, are encompassed by this invention.

The preferred first polymeric stage of such soft polymeric processing aid particles depends, in part, on the processing conditions to which the processing aid particles are exposed, as well as their desired end use. In one preferred embodiment, at least 50 weight percent of the first polymeric stage comprises a first polymeric component having units derived from one or more alkyl (meth)acrylate, or at least 60 weight percent of one or more alkyl (meth)acrylate, or at least 70 weight percent of one or more alkyl (meth)acrylate, or at least 80 weight percent of one or more alkyl (meth)acrylate.

The upper weight percent limit of the first polymeric component of soft polymeric processing aid particles also depends, in part, on the processing conditions to which the polymeric compositions are exposed, as well as their desired end use. In one preferred embodiment, 100 weight percent of the first polymeric stage comprises a first polymeric component having units derived from one or more alkyl (meth)acrylate, or at most 95 weight percent of one or more alkyl (meth)acrylate, or at most 90 weight percent of one or more alkyl (meth)acrylate, or at most 85 weight percent of one or more alkyl (meth)acrylate.

In the above illustrative examples wherein the first polymeric stage of the soft polymeric processing aid particles comprises a first polymeric component having units derived from one or more alkyl (meth)acrylate, in one preferred embodiment, the first polymeric component has units derived from at least one of the following: ethyl acrylate, butyl acrylate, hexyl acrylate, octyl acrylate, or 2-ethylhexyl acrylate. In another preferred embodiment, the first polymeric component of the soft processing aid particles has units derived from at least one of the following: ethyl acrylate, butyl acrylate, or 2-ethylhexyl acrylate. In still another preferred embodiment, the first polymeric component of the soft processing aid particles has units derived from ethyl acrylate.

In instances where the first polymeric component is less than 100 weight percent of the first polymeric stage, the remaining weight percentage can be made up of at least a second polymeric component. It is within the scope of this embodiment of the invention for there to be a plurality of subsequent polymeric components.

If present, the preferred amount of the second polymeric component depends, in part, on the processing conditions to which the polymeric compositions of the present invention are exposed, as well as their desired end use. In one preferred embodiment, at least 5 weight percent of the first polymeric stage comprises a second polymeric component, or at least 10 weight percent of the first polymeric stage comprises a second polymeric component, or at least 15 weight percent of the first polymeric stage comprises a second polymeric component.

The upper weight percent limit of the second polymeric component present also depends, in part, on the processing conditions to which the polymeric compositions of the present invention are exposed, as well as their desired end use. In one preferred embodiment, 50 weight percent of the first polymeric stage comprises a second polymeric component, or at most 40 weight percent of the first polymeric stage comprises a second polymeric component, or at most 30 weight percent of the first polymeric stage comprises a second polymeric component.

If present, the second polymeric component can be any suitable polymeric compound that yields a Tg of 20°C or less for the final polymeric composition. Examples of such suitable polymeric compounds include: other C₁ to C₁₈ alkyl (meth)acrylates , isoprene, vinyl acetate, , styrene, alpha methyl styrene , acidic monomers such as acrylic acid or isobutylene, (meth)acrylonitrile, etc.

The preferred second polymeric component depends, in part, by the processing conditions to which the polymeric compositions of the present invention are exposed, as well as their desired end use. If used as a plastic additive, in one preferred embodiment, the second polymeric component comprises at least one of the following: C₁ to C₁₈ alkyl (meth)acrylates, alpha methyl styrene, styrene, acidic monomers such as (meth)acrylic acid. In another preferred embodiment, the second polymeric component comprises at least one of the following: C₁ to C₁₈ alkyl (meth)acrylates.

The first polymeric stage can also contain units derived from at least one multi-unsaturated monomer. If present, the concentration of such units ranges from 0.01 weight percent to 5 weight percent of the total weight of the core portion. The multi-unsaturated monomer may be one in which the unsaturated groups are similar and of equal reactivity, such as in divinyl benzene, divinyl adipate, ethylene glycol dimethacrylate, butylene glycol diacrylate, trimethylolpropane trimethacrylate, and the like. On the other hand, the multi-unsaturated monomer may be one in which the unsaturated groups are dissimilar and of unequal reactivity, such as in diallyl maleate, allyl methacrylate, allyl acrylate, and the like.

The processing aid particles used when practicing this embodiment can be prepared by any means known to those skilled in the art. One example of a known process is emulsion polymerization (e.g., US Patent 3,833,686). This process can provide populations of processing aid particles having a mean particle size ranging from 10 to 1,000 nm. It is within the scope of this invention for the populations of processing aid particles to have a mean particle size ranging from 20 to 800 nm; or from 30 to 600 nm; or from 40 to 400 nm.

### Presence of At Least Two Different Populations Of Rubber-Containing Polymeric Particles

Thirdly, the impact modifier composition contains at least two different populations of polymeric particles, wherein each has a rubber-containing portion, and wherein the differences are at least one of the following: the void ratio of their rubber containing portions, their chemical compositions, the average sizes of their particles, or the shapes of their particles.

If the difference between the populations is their average particle sizes, there will be a population having a "large" particle size, and a population having a "small" particle size. The average particle size of the large particles is at least 20 percent larger than the average particle size of the small particles. It is within the scope of this embodiment for the average particle size of the large particles to be at least 30 percent larger; or at least 40 percent larger; or at least 50 percent larger than the average particle size of the small particles.

In this embodiment, the large particles typically have a mean particle diameter which ranges from 50 to 7,000 nm. It is within the scope of this invention for the large particles to have a mean particle diameter which ranges from 100 to 5,000 nm; or from 200 to 3,000 nm; or from 300 to 1,000 nm.

On the other hand, the small particles typically has a mean particle diameter which ranges from 10 to 1,000 nm. It is within the scope of this invention for the small particles to have a mean particle diameter which ranges from 30 to 800 nm; or from 50 to 600 nm; or from 100 to 400 nm.

If the difference between the populations of particles is shape, this can include populations of particles having different morphologies such as: ellipsoidal particles having an aspect ratio greater than 1:1; raspberry-shaped particles; multi-lobe-shaped particles; dumbbell-shaped particles; agglomerated particles; round particles, cylindrical particles, abstract-shaped particles, bi-lobal particles, or circular particles.

If the difference between the populations of particles is the void ratio of their respective rubber-containing portions, the volumetric proportion of the voids defined within one of the populations is at least 20 percent greater than the volumetric proportion of voids defined within the other population of polymeric particles. It is within the scope of this invention for the volumetric proportion of the voids defined within one of the populations is at least 30 percent greater, or at least 40 percent greater, or at least 50 percent greater than the volumetric proportion of voids defined within the other population of polymeric particles.

The above define embodiments of the invention wherein the impact modifier composition comprises polymeric particles: (a) having a void-containing rubber portion comprising from 20 to 90 weight percent of the individual polymeric particles, and (b) essentially no crosslinking agent. However, if a crosslinking agent is present, the existence the additional features identified above as "Presence of a Processing Oil Component", "Presence of a Processing Aid Component", and "Presence of at Least Two Different Populations of Rubber-Containing Polymeric Particles" do not need to exist. It is, however, within the scope of this invention for these feature to be present in the embodiment wherein the polymeric particles contain a crosslinking agent.

### Presence Of A Polymeric Blend

Fourthly, the impact modifier composition must contain a population of polymeric particles having a rubber-containing portion which includes at least one of the following blends: (a) an organosiloxane polymer component and an isobutylene polymer component; (b) a vinyl polymer component and an isobutylene polymer component; or (c) an organosiloxane polymer component, a vinyl polymer component and an optional isobutylene polymer component. The individual components of these blends can be present is a single particle, or in different particles, or in a combination thereof.

The proportions of the isobutylene polymer component, the organosiloxane polymer component and the vinyl polymer component in the rubber-containing portion of the polymeric particles are not particularly limited, and may be suitably adjusted in accordance with the purposes. The isobutylene polymer component, the organosiloxane polymer component and the vinyl polymer component used in making the blends present in the rubber-containing portion of the polymeric particles are now described.

In one embodiment, essentially no isobutylene component is present. In another embodiment, the isobutylene polymer component is present in an amount ranging from 0.01 to 0.9 weight percent; or from 0.01 to 0.7 weight percent; or from 0.01 to 0.5 weight percent. In still another embodiment, the isobutylene polymer component is present in an amount ranging from 1 to 99 weight percent; or from 5 to 95 weight percent; or from 10 to 90 weight percent. These weight percentages are based on the total weight of the polymeric particle's rubber containing portion.

In one embodiment, the organosiloxane polymer component is present in an amount ranging from 1 to 50 weight percent; or from 5 to 40 weight percent; or from 10 to 30 weight percent. In another embodiment, the organosiloxane polymer component is present in an amount ranging from 51 to 95 weight percent; or from 55 to 85 weight percent; or from 65 to 75 weight percent. These weight percentages are based on the total weight of the polymeric particle's rubber containing portion.

In one embodiment, the vinyl polymer component is present in an amount ranging from 1 to 50 weight percent; or from 5 to 45 weight percent; or from 10 to 40 weight percent. In another embodiment, the vinyl polymer component is present in an amount ranging from 51 to 89 weight percent; or from 60 to 85 weight percent; or from 65 to 80 weight percent. In still another embodiment, the vinyl polymer component is present in an amount ranging from 90 to 99 weight percent; or from 92 to 98 weight percent; or from 93 to 97 weight percent. These weight percentages are based on the total weight of the polymeric particle's rubber containing portion.

The isobutylene polymer component which can be employed when practicing certain embodiments of this invention is typically an isobutylene polymer containing at least 50% of units derived from isobutylene. The isobutylene polymer is obtained by a method such as cationic polymerization.

Typically, the isobutylene polymer contains at least one reactive functional group at its molecular end, or in its molecular chain, or in both locations. The units other than the isobutylene unit, which constitute the isobutylene polymer, include a unit derived from an initiator used when preparing the isobutylene polymer, a unit derived from a cationically polymerizable monomer which is used in the preparation of the isobutylene polymer as occasion demands, a unit having a reactive functional group introduced into the molecular end or the molecular chain (including side chains) of the isobutylene polymer.

Examples of the unit derived from an initiator used when preparing an isobutylene polymer that can be used when practicing this invention are: --C(CH₃)₂ -- C₆H₄ --C(CH₃)₂ --; --C(CH₃)₂-- C₆H₄ -- (CH₂)₂ --C₆H₄--C(CH₃)₂ -- ; --C(CH₃)₂ -- (CH₂)₂ -- C(CH₃)₂ -- ; C₆H₅ -- C(CH₃)₂ -- . Of these, --C(CH₃)₂ -- C₆H₄ --C(CH₃)₂ -- is preferable from the viewpoint of introduction rate of functional group to the isobutylene polymer.

Examples of the unit derived from a cationically polymerizable monomer which is used in the preparation of the isobutylene polymer as occasion demands are: a unit derived from isoprene monomer, a unit derived from butadiene monomer, a unit derived from styrene monomer, a unit derived from α-methylstyrene monomer, a unit derived from a vinyl ether monomer, and a unit derived from 1-butene monomer. Among these, the unit derived from isoprene monomer is preferable from the viewpoint of a reactivity with isobutylene.

The unit having a reactive functional group introduced into the molecular end or the molecular chain includes a unit having a group as represented by the formula (I) described below, *e.g.*, dimethoxymethylsilyl group, trimethoxysilyl group, diethoxymethylsilyl group, methoxydimethylsilyl group, allyl group, vinyl group, methacryloyl group, acryloyl group or isopropenyl group, a unit having a group containing an unsaturated double bond derived, for instance, from a conjugated diene monomer, a unit derived from isoprene monomer, and a unit derived from butadiene monomer. Among these, the unit derived from isoprene monomer is preferable from the viewpoint of ease in the introduction, and the unit having dimethoxymethylsilyl group is preferable from the viewpoint of the reactivity.

Examples of the unit having a reactive functional group introduced into the molecular end, or the molecular chain of the isobutylene polymer, or both are, for instance, units represented by the formula (I):

**--R--X (I)**

wherein R is a single bond or a divalent hydrocarbon group having 1 to 20 carbon atoms, and X is a halogen atom, *e.g.*, chlorine atom or bromine atom, vinyl group, allyl group, isopropenyl group, acryloyl group, methacryloyl group, epoxy group, amino group, cyano group, isocyano group, cyanate group, isocyanate group, carboxyl group, acid anhydride residue, hydroxyl group, mercapto group or a silicon-containing group represented by the formula (II): 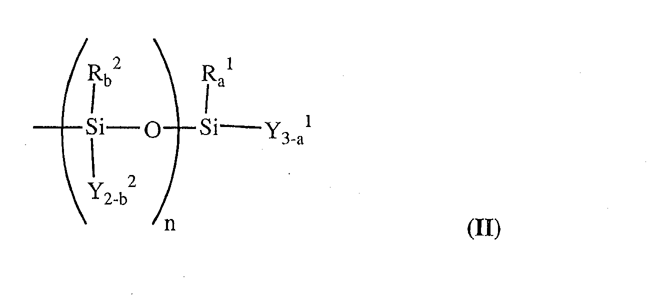 wherein R¹ and R² are individually a monovalent hydrocarbon group having 1 to 20 carbon atoms or a triorganosiloxy group, Y¹ and Y² are individually hydroxyl group or a hydrolyzable group, e.g., hydrogen atom, alkoxyl group, acyloxy group, ketoximate group, amino group, amido group, aminoxy group, mercapto group or alkenyloxy group, and may be the same or different when they exist two or more, a is 0 or an integer of 1 to 3, b is 0 or an integer of 1 to 2, and n is 0 or an integer of 1 to 18; provided that each of R¹ , R², Y¹ and Y² themselves may be the same or different when each group exists plurally.

The halogen atom identified as X in the formula (I) includes, for instance, chlorine atom and bromine atom. Also, the hydrolyzable group identified as Y¹ and Y² in the formula (II) includes, for instance, hydrogen atom, alkoxyl group, acyloxy group, ketoximate group, amino group, amido group, aminoxy group, mercapto group or alkenyloxy group. Of these, an alkoxyl group is particularly preferable from the viewpoints of mild hydrolyzability and ease in handling.

Isobutylene polymers that can be used when practicing certain embodiments of this invention can have in the molecular end, or in the molecular chain, or in both locations, at least one of the following reactive functional groups: a halogen- containing group, a radically reactive unsaturated group such as vinyl group, allyl group, isopropenyl group, acryloyl group or methacryloyl group, and a silicon-containing group. These are preferable from the viewpoints of availability and ease in handling. Also, isobutylene polymers having a reactive functional group derived from a conjugated diene monomer in the molecular end or the molecular chain are preferable from the viewpoints of versatility and low cost. Isobutylene polymers having allyl group or a silicon-containing group as a reactive functional group are preferable from the viewpoints of conversion and enhancement of impact resistance. Among the above-mentioned isobutylene polymers, an allyl group- terminated polyisobutylene which has allyl group as a reactive functional group at the molecular end and a silicon-containing group-terminated polyisobutylene which has a silicon-containing group as a reactive functional group at the molecular end are particularly preferred from the viewpoint of ease in controlling the crosslinking structure.

The number average molecular weight of the isobutylene polymers that can be used when practicing certain embodiments of this invention is typically from 300 to 1,000,000 g/mol; or from 500 to 500,000 g/mol. If the number average molecular weight is less than 300 g/mol, too much unreacted material remains, and if the number average molecular weight is more than 1,000,000 g/mol, the viscosity is high and it tends to be difficult to handle.

Examples of the isobutylene polymer having a reactive functional group represented by the formula (I) at the molecular end are, for instance, a low molecular weight polyisobutylene oil having an average molecular weight of about 300 to about 5,000 g/mol, *e.g.*, Nisseki Polybutene HV-3000 (isopropenyl group-terminated isobutylene polymer, made by Nippon Sekiyu Kagaku Kabushiki Kaisha), Nissan Polybutene 200N (isopropenyl group- terminated isobutylene polymer, made by NOF Corporation) and Idemitsu Polybutene 300R (isopropenyl group-terminated isobutylene polymer, made by Idemitsu Sekiyu Kagaku Kabushiki Kaisha); a high molecular weight polyisobutylene having a viscosity average molecular weight of 30,000 to 60,000 g/mol and commercially available under the trade mark "Tetolax" (isopropenyl group-terminated isobutylene polymer, made by Nippon Petrochemicals Co., Ltd.); a polyisobutylene having an allyl terminal group as disclosed in JP-B-7-53768; and a polyisobutylene having a silicon- containing terminal group as disclosed in JP-B-4-69659.

The reactive functional group which can be present in the molecular chain of the isobutylene polymer includes, for instance, a group having an unsaturated double bond derived from a diene monomer. Typical example of such a diene monomer is, for instance, isoprene.

Examples of the isobutylene polymer having a group containing the above-mentioned radically reactive unsaturated group in the molecular chain are a copolymer comprising units derived from isobutylene monomer and units derived from isoprene monomer, which is generally known as so- called "butyl rubber" and is commercially available, *e.g.*, JSR Butyl 268 (isobutylene-isoprene copolymer, made by Japan Synthetic Rubber Co., Ltd. ), KALAR5263 and KALENE800 (isobutylene-conjugated diene copolymer, both available from HARDMAN INCORPORATED).

As the isobutylene polymers used in certain embodiments of this invention, those having in the molecular end, or in the molecular chain, or in both locations, at least one reactive functional group selected from a halogen- containing group, vinyl group, allyl group, isopropenyl group, acryloyl group, methacryloyl group and a silicon-containing group are preferable from the viewpoints of availability and ease in handling. Also, isobutylene polymers having a reactive functional group derived from a diene monomer in the molecular end, or in the molecular chain, or in both locations, are preferable from the viewpoints of versatility and low cost. Isobutylene polymers having allyl group or a silicon-containing group as a reactive functional group are also preferable from the viewpoints of enhancement of impact resistance and transparency. Further, among these isobutylene polymers, an allyl group-terminated polyisobutylene which has allyl group as a reactive functional group at the molecular end and a silicon- containing group-terminated polyisobutylene which has a silicon- containing group as a reactive functional group at the molecular end are particularly preferred from the viewpoint of ease in controlling the crosslinking structure.

The isobutylene polymers used in certain embodiments of the present invention may contain a moiety derived from a crosslinking agent or a graftlinking agent in order to raise the gel fraction. Preferably, the content of the moiety derived from a crosslinking agent or a graftlinking agent is from 0 to 20%, especially from 0 to 10%, with respect to the moiety derived from a crosslinking agent, and is from 0 to 20%, especially from 0 to 10%, with respect to a graftlinking agent. These ranges are desirable from the viewpoint of a balance between impact resistance-improving effect and processability.

The organosiloxane polymer component used when practicing certain embodiments of this invention includes an organosiloxane polymer. Such a polymer can be obtained by a ring-opening polymerization or condensation polymerization of an organosiloxane monomer. Examples of such include: hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, octaphenylcyclotetrasiloxane, octaethylcyclotetrasiloxane, dimethyldimethoxysiloxane, diethyldimethoxysilane, diethyldiethoxysilane, diphenyldimethoxysilane, and the like. These may be used alone or in admixture thereof.

The organosiloxane polymer may contain a moiety derived from a crosslinking agent or a graftlinking agent. The content of the moiety derived from a crosslinking agent is from 0 to 20%, especially from 0 to 10%. The content of the moiety derived from a graftlinking agent is from 0 to 20%, especially from 0 to 10%. These ranges are desirable from the viewpoint of a balance between impact resistance-improving effect and processability.

The vinyl polymer component used when practicing certain embodiments of this invention includes a vinyl polymer. Such a polymer can be derived from radical polymerization of a vinyl monomer.

Any radically polymerizable unsaturated compounds can be used as the vinyl monomer without any restriction. Examples of such vinyl monomers include: an acrylic ester such as methyl acrylate, ethyl acrylate, n-propyl acrylate, n-butyl acrylate, 2-ethylhexyl acrylate or n-octyl acrylate; a methacrylic ester such as methyl methacrylate, ethyl methacrylate, butyl methacrylate, 2-ethylhexyl methacrylate, cyclohexyl methacrylate, benzyl methacryalte or isobornyl methacrylate; an aromatic alkenyl compound such as styrene, α- methylstyrene, p-methylstyrene or vinyltoluene; a vinyl cyanide compound such as acrylonitrile or methacrylonitrile; a conjugated diene compound such as butadiene or isoprene; a halogen-containing unsaturated compound such as vinyl chloride or vinylidene chloride; and other vinyl compounds. These may be used alone or in admixture thereof. Of these, n-butyl acrylate, methyl methacrylate and styrene are preferable from the viewpoints of versatility, low cost and ease in handling.

The vinyl polymer may contain a moiety derived from a crosslinking agent or a graftlinking agent. The content of the moiety derived from a crosslinking agent is from 0 to 20%, especially from 0 to 10%. The content of the moiety derived from a graftlinking agent is from 0 to 20%, especially from 0 to 10%. These ranges are desirable from the viewpoint of a balance between impact resistance-improving effect and processability.

The above-mentioned isobutylene polymer component, organosiloxane polymer component and vinyl polymer component may be, as stated above, components derived from polymers containing a moiety derived from a crosslinking agent or a graftlinking agent. If used, the crosslinking agent is typically a compound having a plurality of functional groups in a molecule, and these plural functional groups have the same reactivity. The graftlinking agent is typically a compound having a plurality of functional groups in a molecule, and these plural functional groups have a different reactivity. The crosslinking agent is used for the purpose of producing crosslinkages in a single polymer component, and the graftlinking agent is used for the purpose of producing crosslinkages between different polymer components. In practical action, however, there are cases where the crosslinking agent may produce crosslinkages between different polymer components, and the graftlinking agent may produce crosslinkages in a single polymer component, so the distinction of the actions of both agents is not definite.

Examples of the crosslinking agents that can be used when practicing certain embodiments of this invention include: a trifunctional silane compound such as trimethoxymethylsilane or triethoxyphenylsilane; a tetrafunctional silane compound such as tetramethoxysilane, tetraethoxysilane, tetrapropoxysilane or tetrabutoxysilane; a difunctional vinyl compound such as ethylene glycol dimethacrylate, propylene glycol dimethacrylate, 1 ,3-butylene glycol dimethacrylate, 1,4- butylene glycol dimethacrylate or divinyl benzene; and a trifunctional vinyl compound such as triallyl cyanurate or triallyl isocyanurate. These may be used alone or in admixture thereof. These crosslinking agents can be suitably selected according to the presence or absence and the kind of a functional group in the isobutylene polymer, and the kind of a polymer to be crosslinked.

Examples of the graftlinking agents that can be used when practicing certain embodiments of this invention include: a (meth)acrylic functional silane compound such as β-methacryloyloxyethyldimethoxymethylsilane,
γ- methacryloyloxypropylmethoxydimethylsilane,
γ- methacryloyloxypropyldimethoxymethylsilane,
γ- methacryloyloxypropyltrimethoxysilane,
γ- methacryloyloxypropylethoxydiethylsilane,
γ- methacryloyloxypropyldiethoxymethylsilane,
γ- methacryloyloxypropyltriethoxysilane,
δ- methacryloyloxybutyldiethoxymethylsilane,
γ- acryloyloxypropyldimethoxymethylsilane or
γ- acryloyloxypropyltrimethoxysilane; an ethylenic functional silane compound such as vinyltrimethoxysilane, vinyldimethoxymethylsilane, vinyltriethoxysilane,
p-vinylphenyltrimethoxysilane or
p- vinylphenyldimethoxymethylsilane; a mercapto functional silane compound such as γ-mercaptopropyltrimethoxysilane or
γ- mercaptopropyldimethoxymethylsilane; and a vinyl compound such as allyl methacrylate.
These may be used alone or in admixture thereof. These graftlinking agents can be suitably selected according to the presence or absence and the kind of a functional group in the isobutylene polymer, and the kind of a polymer to be graftlinked.

The crosslinking agent and the graftlinking agent may be used alone or in admixture of two or more of them. The amount of the crosslinking agent or the graftlinking agent is preferably at least 0.1 part (part by weight, hereinafter the same), more preferably at least 0.3 part, per 100 parts of the total of the isobutylene polymer which constitutes the isobutylene polymer component, the organosiloxane monomer which constitutes the organosiloxane polymer component, and the vinyl monomer which constitutes the vinyl polymer component, so that the effect of use of these agents is sufficiently exhibited. It is also preferable that the amount of the crosslinking agent and/or the graftlinking agent is at most 25 parts, especially at most 10 parts, per 100 parts of the total of the isobutylene polymer, the organosiloxane monomer and the vinyl monomer, so that the obtained crosslinked rubber particles exhibit a sufficient impact resistance-improving effect and rise of cost is suppressed.

The process for preparing crosslinked rubber-containing polymeric particles used when practicing the embodiment of the invention wherein the impact modifier composition contains a population of polymeric particles having a rubber-containing portion which includes at least one of the following blends: (a) an organosiloxane polymer component and an isobutylene polymer component; (b) a vinyl polymer component and an isobutylene polymer component; or (c) an organosiloxane polymer component, a vinyl polymer component and an optional isobutylene polymer component, is not limited. It is possible to prepare these polymeric particles in a single stage or multistage by utilizing emulsion polymerization method or micro-suspension polymerization method. For example, a latex containing crosslinked rubber particles can be made by mixing, with shearing, a liquid mixture of an isobutylene polymer, an organosiloxane monomer, a vinyl monomer, a crosslinking agent, a graftlinking agent and optionally a usual radical polymerization initiator with water in the presence of an emulsifier and, optionally, a dispersion stabilizer such as a higher alcohol; and, using a homogenizer to emulsify the mixture and carry out the polymerization. At that time, a polymerization reaction of the organosiloxane monomer can be accelerated by acidifying the reaction system with an inorganic acid such as hydrochloric acid, sulfuric acid or nitric acid, or an organic acid having a surface activity such as alkylbenzene sulfonate, alkyl sulfonate or alkyl sulfate. The thus prepared latex containing rubber particles can be directly used or can also be used after separating and recovering the rubber-containing polymeric particles.

The polymeric particles of this embodiment can also be made by subjecting the above-mentioned rubber-containing particles containing polymeric blends of an organosiloxane polymer component, a vinyl polymer component and/or an isobutylene polymer component, to a graft copolymerization with a vinyl monomer. This typically forms a particle having a core/shell configuration.

The vinyl monomer to be graft-copolymerized onto these rubber-containing particles includes various kinds of vinyl monomers, for instance, an acrylic ester such as methyl acrylate, ethyl acrylate, n-propyl acrylate, n-butyl acrylate, 2-ethylhexyl acrylate or n-octyl acrylate; a methacrylic ester such as methyl methacrylate, ethyl methacrylate, butyl methacrylate, 2-ethylhexyl methacrylate, cyclohexyl methacrylate, benzyl methacrylate or isobornyl methacrylate; an aromatic alkenyl compound such as styrene, α-methylstyrene or p-methylstyrene; a vinyl cyanide compound such as acrylonitrile or methacrylonitrile; a conjugated diene compound such as butadiene or isoprene; and a halogen-containing unsaturated compound such as vinyl chloride or vinylidene chloride. These may be used alone or in admixture thereof. These vinyl monomers are suitably selected in accordance with a combination with various resins to be improved in impact resistance.

Also, in the graft polymerization, either or both of the crosslinking agent and the graftlinking agent can be used, as occasion demands. The total amount of the crosslinking agent and the graftlinking agent is from 0 to 20 parts, especially 0 to 10 parts, per 100 parts of the vinyl monomer used in the graft polymerization.

The proportions of the rubber-containing portion and the vinyl monomer portion is not limited. Typically, based on the whole weight of the polymeric particles, in one particular embodiment, the proportion of the rubber-containing portion is from 30 to 89%, or from 40 to 85%, or from 50 to 80%. In another particular embodiment, the proportion of the rubber-containing portion is from 90 to 100%, or from 92 to 99%, or from 93 to 98%.

On the other hand, in one particular embodiment, the proportion of the vinyl monomer portion is from 11 to 70%, or from 15 to 60%; or from 20 to 50%. In another particular embodiment, the proportion of the vinyl monomer portion is from 0 to 10%, or from 1 to 8%; or from 2 to 7%.

The graft efficiency in the crosslinked rubber-containing polymeric particles of the present invention is not limited. In certain circumstances, it is preferred if the graft efficiency is at least 30%, or at least 50%.

The process for preparing the rubber-containing polymeric particles which further include a vinyl monomer portion, is not limited. These polymeric particles can be prepared, for example, by a process wherein the above-mentioned vinyl monomer is added to the above-mentioned rubber-containing particle latex and polymerized by a radical polymerization technique in a single stage or multi-stages to give a latex of the graft copolymer. In case that the rubber-containing particle latex has been prepared in a reaction system made acidic, the rubber-containing particle latex may be neutralized prior to conducting the graft polymerization by adding an aqueous solution of an alkali such as sodium hydroxide, potassium hydroxide or sodium carbonate to the latex.

In some instances, these rubber-containing polymeric particles can also have an intermediate layer interposed between the rubber-containing core portion and the vinyl monomer shell portion (hereinafter referred to as the "intermediate shell"). If present, the intermediate shell typically comprises units derived from methyl methacrylate. Generally, at least 50 weight percent of the intermediate shell is comprised of methyl methacrylate. It is within the scope of this embodiment of the invention for an intermediate shell to be comprised essentially of methyl methacrylate. Thus, the intermediate shell may be a homopolymer of methyl methacrylate, a copolymer of methyl methacrylate with a small amount, such as from about 1 to about 20 parts of an alkyl acrylate or an alkyl methacrylate, such as ethyl methacrylate or butyl acrylate, a copolymer of methyl methacrylate with styrene, and a copolymer of methyl methacrylate with methacrylic acid.

When present, the intermediate shell is typically at least 2 weight percent of the polymeric particles making up the novel polymeric composition. It is within the scope of this embodiment for the intermediate shell to be at least 5 weight percent of the polymeric particle, or at least 7 weight percent of the polymeric particle. On the other hand, when present, the intermediate shell is typically at most 25 weight percent of the polymeric particle. It is within the scope of this embodiment of the invention for the intermediate shell to be at most 20 weight percent of the polymeric particle, or at most 15 weight percent of the polymeric particle. The preferred weight percentage depends upon the desired end use.

The intermediate shell polymer may be partially or totally attached to or grafted to the rubber-containing portion of the polymeric particle. It may further contain from about 0.05 weight percent to about 5 weight percent of one or more multi- unsaturated monomers, as defined above.

The ratio of core to intermediate shell is as defined to ensure that the highest impact efficiency can be achieved whilst leaving a shell to act as a compatibilizing layer between the rubbery polymer and the matrix resin. The use of a low level of intermediate shell means that the intermediate polymeric particle will not have a particle size much larger than the original core particle.

In this specific embodiment, the reaction conditions for formation of both the intermediate and final shells are those under which essentially no new polymer particles are formed. These conditions are well known, and generally relate to avoiding formation of new polymer particles in separate soap- stabilized micelles. Normally, little or no new emulsifier is added, and the soap concentration is maintained below the critical micelle concentration, which is known or can be determined for most emulsifiers. Further, the use of highly water-soluble monomers is avoided, to avoid formation of separate particles. However, if the polymer is water insoluble, then water soluble monomers can be used.

It is impossible to define the specific conditions for each emulsion polymerization since every process is different. However, a common rule that can be used when determining the ideal conditions is to test the further polymerization on a small scale by adding no additional emulsifier to a system already low in emulsifier; if the emulsion remains stable, then a larger reaction may be conducted.

A further embodiment of the invention is where the impact modifier composition comprises polymeric particles having a void-containing rubber portion comprising from 92 to 100 weight percent of the individual polymeric particles. In this embodiment, a crosslinking agent can, optionally, be present. Moreover, the additional features identified as "Presence of a Processing Oil Component", "Presence of a Processing Aid Component", "Presence of at Least Two Different Populations of Rubber-Containing Polymeric Particles", and "Presence of a Polymeric Blend" can also, optionally, exist when practicing this embodiment.

If a crosslinking agent is present in the void-containing rubber portion of the polymeric particles employed when practicing any of the embodiments of this invention, the concentration of the crosslinking agent in the void-containing rubber portion typically ranges from 0.01 to 10 weight percent. It is within the scope of this invention for the concentration of the crosslinking agent to range from 0.05 to 7 weight percent; or from 0.1 to 3 weight percent; or from 0.15 to 4 weight percent; or from 0.2 to 1 weight percent. The above weight percentages are based on the total weight of the void-containing rubber portion.

Examples of crosslinking agents that can be used when practicing this invention include: allyl methacrylate, divinylbenzene, diallyl phthalate, polyethylene glycol dimethacrylate, 1,3-butylene glycol dimethacrylate, and ethylene glycol dimethacrylate. These may be used solely or in a combination use of two or more thereof.

The void-containing rubber particles have at least one cavity defined therein. The number of the cavities is not limited to one. The shape of the cavity or cavities is also not limited; and, the cavity or cavities may be in the form of sphere, flat sphere, pore or honeycomb. Also, on the inner surface of the cavity or cavities, there may exist concave or convex or protrusions.

The average particle size of the void-containing rubber particles typically ranges from 50 to 2,000 nm. It is within the scope of this invention for these void-containing rubber particles to have an average particle size ranging from 75 to 1,750 nm; or from 100 to 1,500 nm, or from 200 to 1,000 nm. The preferred average particle size of the void-containing rubber particles depends, in part, on the desired properties of the resulting polymeric composition. After reading this specification, those skilled in the art will be able to determine the average particle size which best suits their needs.

The rubber component of these void-containing rubber particles typically has a Tg of not greater than 20°C. It is, however, within the scope of this invention for the Tg of this rubber component to be less than 0°C ; or less than -20°C , or less than -40°C . The preferred Tg of the rubber component depends, in part, on the desired properties of the resulting polymeric composition. After reading this specification, those skilled in the art will be able to determine Tg which best suits their needs.

Examples of rubbers satisfying these conditions include: diene rubbers, acrylic rubbers, silicon rubbers, and olefin rubbers. Examples of diene rubbers include: butadiene, styrenebutadiene, and acrylonitrile-butadiene. Examples of acrylic rubber include: butyl acrylate, butadiene-butyl acrylate, and 2-ethylhexyl acrylate-butyl acrylate. One examples of a silicon rubber includes: polydimethyl siloxane. Examples of olefin rubbers include: ethylenepropylene, and ethylenepropylene-diene.

The void-containing rubber particles can be prepared by applying techniques used in the field of paints. For example, the following methods are well known ("Gosei Latex no Oyo (application of synthetic latex)", Takaaki Sugimura et al., p 285). Examples of methods of making the void-containing rubber particles of the present invention include:
(a) method wherein a W/O/W emulsion is prepared, and a monomer in the O layer is polymerized (O: lipophilic, W: hydrophilic);
(b) methods wherein core-shell particles having swellable core is swelled at a temperature of at least glass transition temperature of shell layer to make hollow;
(c) methods by using a two- step polymerization of polymers having different solubility parameter;
(d) methods wherein a polymerizable monomer containing a cross linkable monomer and a hydrophilic monomer, and an oil substance are finely dispersed in water to make an O/W emulsion, and the monomer is polymerized to remove the oily substance; and
(e) methods by using migration of a carboxylic acid copolymerized into a particle under acidic or alkaline condition in the particle.

When a monomer is polymerized in the presence of a void-containing rubber particle, the monomer may be polymerized as it is with the void-containing rubber particle to obtain a graft polymer, or a larger graft polymer may be obtained by enhancement methods such as acid enhancement and salt enhancement of a rubber particle.

Voids of a rubber which are hollow in a latex state can be confirmed by TEM observation after embedding a rubber latex in an epoxy resin and the like, dying it with ruthenium tetraoxide and the like. Further, the void ratio can be calculated by exactly measuring the particle size of a rubber latex by Microtrac UPA (Ultrafine Particle Analyzer) and the like, and then measuring light scattering strength of the same rubber latex.

The void ratio of the cavity to the rubber particle typically ranges from 1 to 90%. It is within the scope of this invention for cavity ratio to range from 5 to 80%; or from 10 to 70%, or from 15 to 60%. The preferred void ratio depends, in part, on the desired properties of the resulting polymeric composition. After reading this specification, those skilled in the art will be able to determine the void ratio which meets their needs. There is no particular limitation for the method for preparing hollow rubber, and the rubber can be efficiently prepared by using emulsion polymerization.

The void-containing rubber particles of the present invention can also, optionally, have a vinyl monomer grafted thereto. This typically forms a particle having a core/shell configuration.

The vinyl monomer to be graft-copolymerized onto these rubber-containing particles includes various kinds of vinyl monomers, for instance, an acrylic ester such as methyl acrylate, ethyl acrylate, n-propyl acrylate, n-butyl acrylate, 2-ethylhexyl acrylate or n-octyl acrylate; a methacrylic ester such as methyl methacrylate, ethyl methacrylate, butyl methacrylate, 2-ethylhexyl methacrylate, cyclohexyl methacrylate, benzyl methacrylate or isobornyl methacrylate; an aromatic alkenyl compound such as styrene, α-methylstyrene or p-methylstyrene; a vinyl cyanide compound such as acrylonitrile or methacrylonitrile; a conjugated diene compound such as butadiene or isoprene; and a halogen-containing unsaturated compound such as vinyl chloride or vinylidene chloride. These may be used alone or in admixture thereof. These vinyl monomers are suitably selected in accordance with a combination with various resins to be improved in impact resistance.

Also, in the graft polymerization, either or both of the crosslinking agent and the graftlinking agent can be used, as occasion demands. The total amount of the crosslinking agent and the graftlinking agent is from 0 to 20 parts, especially 0 to 10 parts, per 100 parts of the vinyl monomer used in the graft polymerization.

The proportions of the rubber-containing portion and the vinyl monomer portion is not limited. Typically, based on the whole weight of the polymeric particles, in one particular embodiment, the proportion of the rubber-containing portion is from 30 to 89%, or from 40 to 85%, or from 50 to 80%. In another particular embodiment, the proportion of the rubber-containing portion is from 90 to 100%, or from 92 to 99%, or from 93 to 98%.

On the other hand, in one particular embodiment, the proportion of the vinyl monomer portion is from 11 to 70%, or from 15 to 60%; or from 20 to 50%. In another particular embodiment, the proportion of the vinyl monomer portion is from 0 to 10%, or from 1 to 8%; or from 2 to 7%.

The graft efficiency in the crosslinked rubber-containing polymeric particles of the present invention is not limited. In certain circumstances, it is preferred if the graft efficiency is at least 30%, or at least 50%.

The process for preparing the rubber-containing polymeric particles which further include a vinyl monomer portion, is not limited. These polymeric particles can be prepared, for example, by a process wherein the above-mentioned vinyl monomer is added to the above-mentioned rubber-containing particle latex and polymerized by a radical polymerization technique in a single stage or multi-stages to give a latex of the graft copolymer. In case that the rubber-containing particle latex has been prepared in a reaction system made acidic, the rubber-containing particle latex may be neutralized prior to conducting the graft polymerization by adding an aqueous solution of an alkali such as sodium hydroxide, potassium hydroxide or sodium carbonate to the latex.

In some instances, these rubber-containing polymeric particles can also have an intermediate layer interposed between the rubber-containing core portion and the vinyl monomer shell portion (hereinafter referred to as the "intermediate shell"). If present, the intermediate shell typically comprises units derived from methyl methacrylate. Generally, at least 50 weight percent of the intermediate shell is comprised of methyl methacrylate. It is within the scope of this embodiment of the invention for an intermediate shell to be comprised essentially of methyl methacrylate. Thus, the intermediate shell may be a homopolymer of methyl methacrylate, a copolymer of methyl methacrylate with a small amount, such as from about 1 to about 20 parts of an alkyl acrylate or an alkyl methacrylate, such as ethyl methacrylate or butyl acrylate, a copolymer of methyl methacrylate with styrene, and a copolymer of methyl methacrylate with methacrylic acid.

When present, the intermediate shell is typically at least 2 weight percent of the polymeric particles making up the novel polymeric composition. It is within the scope of this embodiment for the intermediate shell to be at least 5 weight percent of the polymeric particle, or at least 7 weight percent of the polymeric particle. On the other hand, when present, the intermediate shell is typically at most 25 weight percent of the polymeric particle. It is within the scope of this embodiment of the invention for the intermediate shell to be at most 20 weight percent of the polymeric particle, or at most 15 weight percent of the polymeric particle. The preferred weight percentage depends upon the desired end use.

The intermediate shell polymer may be partially or totally attached to or grafted to the rubber-containing portion of the polymeric particle. It may further contain from about 0.05 weight percent to about 5 weight percent of one or more multi- unsaturated monomers, as defined above.

The ratio of core to intermediate shell is as defined to ensure that the highest impact efficiency can be achieved whilst leaving a shell to act as a compatibilizing layer between the rubbery polymer and the matrix resin. The use of a low level of intermediate shell means that the intermediate polymeric particle will not have a particle size much larger than the original core particle.

In this specific embodiment, the reaction conditions for formation of both the intermediate and final shells are those under which essentially no new polymer particles are formed. These conditions are well known, and generally relate to avoiding formation of new polymer particles in separate soap- stabilized micelles. Normally, little or no new emulsifier is added, and the soap concentration is maintained below the critical micelle concentration, which is known or can be determined for most emulsifiers. Further, the use of highly water-soluble monomers is avoided, to avoid formation of separate particles. However, if the polymer is water insoluble, then water soluble monomers can be used.

It is impossible to define the specific conditions for each emulsion polymerization since every process is different. However, a common rule that can be used when determining the ideal conditions is to test the further polymerization on a small scale by adding no additional emulsifier to a system already low in emulsifier; if the emulsion remains stable, then a larger reaction may be conducted.

Another embodiment of this invention relates to novel thermoplastic resin compositions which contain a plastic resin component and any of the novel impact modifier compositions disclosed herein. Examples of the thermoplastic resins to which the novel impact modifier compositions of the present invention are applicable include: polymethyl methacrylate resin, polyvinyl chloride resin polyvinylidene chloride resin, polyethylene resin, polypropylene resin, cyclic olefin copolymer resin, polycarbonate resin, polyester resin, a mixture of polycarbonate resin and polyester resin, a homopolymer or copolymer of 70 to 100% of at least one vinyl monomer selected from the group consisting of an aromatic alkenyl compound, a vinyl cyanide compound and a (meth)acrylic acid ester and 30 to 0% of at least one other monomer copolymerizable therewith, e.g., other vinyl monomer such as ethylene, propylene or vinyl acetate and a conjugated diene monomer such as butadiene or isoprene, polystyrene resin, polyphenylene ether resin, a mixture of polystyrene resin and polyphenylene ether resin, and the like. A wide range of plastic resins are usable without being limited to the exemplified resins. Polymethyl methacrylate resin, polyvinyl chloride resin, polypropylene, cyclic olefin copolymers, polycarbonate resin and polyester resin are particularly preferable since effects of improvement in weatherability, impact resistance and the like are easy to be produced.

In one specific embodiment, the amount of the novel impact modifier compositions added to a thermoplastic resin is typically from 50 to 95 parts, and more typically from 60 to 90 parts, per 100 parts of the thermoplastic resin. In this embodiment, the resulting product can be used as a concentrate which is, thereafter, added to a thermoplastic resin producing process to produce a final product.

In another specific embodiment, the amount of the novel impact modifier compositions added to a thermoplastic resin is typically from 0.1 to 45 parts, and more typically from 1 to 40 parts, per 100 parts of the plastic resin. In this embodiment, the resulting product is the final product. If the amount of the novel is less than 0.1 part, the impact resistance-improving effect tends to become insufficient, and if the amount is more than 50 parts, the properties of the thermoplastic resin tend to be impaired.

The resulting thermoplastic resin composition may further contain one or more of the following: lubricant, processing aid, rheology modifier, dye, pigment, flame retardant, thermal stabilizer, antioxidant, antiozonant, ultraviolet stabilizer, mold release agent, reinforcing filler or non-reinforcing filler. If present, the reinforcing filler may be least one of the following: glass fibers, glass spheres, talc, or mica. In the case of a polyvinyl chloride resin composition made in accordance with this embodiment of the invention, the novel resin composition may also contain a heat distortion improver, such as a polyglutarimide.

## Claims

1. A polymeric composition comprising:
a. a population of polymeric particles, wherein said polymeric particles comprise void-containing rubber portion, wherein the volumetric proportion of the voids defined therein ranges from 1 to 90 percent, wherein the void-containing rubber portion comprises from 20 to 90 weight percent of the individual polymeric particles, and
b. at least one of the following:
1) at least 1 weight percent of a processing oil component;
2) at least 2 weight percent of a processing aid component;
3) at least two different populations of polymeric particles, wherein each has a rubber-containing portion, and wherein the difference between the populations is in at least one of the following areas:
a) the void concentration in the rubber-containing portions of each population,
b) the chemical composition of each population,
c) the average particle size of each population, and
d) the shape of each population; and
4) least one population of polymeric particles having a rubber-containing portion which includes at least one of the following blends:
a) an organosiloxane polymer component and an isobutylene polymer component,
b) a vinyl polymer component and an isobutylene polymer component, and
c) an organosiloxane polymer component, a vinyl polymer component and an optional isobutylene polymer component.

2. A polymeric composition as recited in claim 1, wherein the polymeric composition comprises a processing aid component, and wherein the processing aid component comprises particles having of polymerized units derived from one or more ethylenically unsaturated monomers.

3. A polymeric composition as recited in claim 1, wherein the polymeric composition comprises a processing oil component, and wherein the processing oil component comprises at least one of the following: a polymer which have a weight average molecular weight of less than 5,000 g/mol; an alkylacrylate having an alkyl group containing 12 or more carbon atoms; an ester containing carboxylic acids or alcohols with 12 or more carbon atoms; a vegetable oil; a marine oil; an industrial oil; a palm oil; an animal fat; or a mineral oils.

4. A polymeric composition as recited in claim 1, wherein the polymeric composition comprises at least two different populations of polymeric particles, wherein each has a rubber-containing portion, wherein the difference between the populations is the average particle size of each population, and wherein the average particle size of one population of particles is at least 20 percent larger than the average particle size of the other population of particles.

5. A polymeric composition as recited in claim 1, wherein the polymeric composition comprises least one population of polymeric particles having a rubber-containing portion which includes at least one of the following blends:
a. an organosiloxane polymer component and an isobutylene polymer component,
b. a vinyl polymer component and an isobutylene polymer component, and
c. an organosiloxane polymer component, a vinyl polymer component and an optional isobutylene polymer component

6. A polymeric composition comprising a population of polymeric particles, wherein said polymeric particles comprise void-containing rubber portion, wherein the volumetric proportion of the voids defined therein ranges from 1 to 90 percent, and wherein the void-containing rubber portion comprises from 92 to 100 weight percent of the individual polymeric particles.

7. A polymeric composition as recited in claim 6 further comprising at least one of the following: :
a. at least 1 weight percent of a processing oil component;
b. at least 2 weight percent of a processing aid component;
c. at least two different populations of polymeric particles, wherein each has a rubber-containing portion, and wherein the difference between the populations is in at least one of the following areas:
1) the void concentration in the rubber-containing portions of each population,
2) the chemical composition of each population,
3) the average particle size of each population, and
4) the shape of each population; and
d. least one population of polymeric particles having a rubber-containing portion which includes at least one of the following blends:
1) an organosiloxane polymer component and an isobutylene polymer component,
2) a vinyl polymer component and an isobutylene polymer component, and
3) an organosiloxane polymer component, a vinyl polymer component and an optional isobutylene polymer component.

8. A thermoplastic resin systems comprising a plastic resin component and an impact modifier component, wherein the impact modifier component comprises a polymeric composition comprising:
a. a population of polymeric particles, wherein said polymeric particles comprise void-containing rubber portion, wherein the volumetric proportion of the voids defined therein ranges from 1 to 90 percent, wherein the void-containing rubber portion comprises from 20 to 90 weight percent of the individual polymeric particles, and
b. at least one of the following:
1) at least 1 weight percent of a processing oil component;
2) at least 2 weight percent of a processing aid component;
3) at least two different populations of polymeric particles, wherein each has a rubber-containing portion, and wherein the difference between the populations is in at least one of the following areas:
a) the void concentration in the rubber-containing portions of each population,
b) the chemical composition of each population,
c) the average particle size of each population, and
d) the shape of each population; and
4) least one population of polymeric particles having a rubber-containing portion which includes at least one of the following blends:
a) an organosiloxane polymer component and an isobutylene polymer component,
b) a vinyl polymer component and an isobutylene polymer component, and
c) an organosiloxane polymer component, a vinyl polymer component and an optional isobutylene polymer component.

9. A thermoplastic resin systems comprising a plastic resin component and an impact modifier component, wherein the impact modifier component comprises a polymeric composition comprising a population of polymeric particles, wherein said polymeric particles comprise void-containing rubber portion, wherein the volumetric proportion of the voids defined therein ranges from 1 to 90 percent, and wherein the void-containing rubber portion comprises from 92 to 100 weight percent of the individual polymeric particles.

10. A thermoplastic resin systems as recited in claim 10, wherein said impact modifier component further comprises at least one of the following: :
a. at least 1 weight percent of a processing oil component;
b. at least 2 weight percent of a processing aid component;
c. at least two different populations of polymeric particles, wherein each has a rubber-containing portion, and wherein the difference between the populations is in at least one of the following areas:
1) the void concentration in the rubber-containing portions of each population,
2) the chemical composition of each population,
3) the average particle size of each population, and
4) the shape of each population; and
d. least one population of polymeric particles having a rubber-containing portion which includes at least one of the following blends:
1) an organosiloxane polymer component and an isobutylene polymer component,
2) a vinyl polymer component and an isobutylene polymer component, and
3) an organosiloxane polymer component, a vinyl polymer component and an optional isobutylene polymer component.
